# EUROPEAN PATENT SPECIFICATION

(11) **EP 3 679 478 B1**
(45) Date of publication and mention of the grant of the patent: **06.05.2026**
(21) Application number: 17930897.8
(22) Date of filing: 06.11.2017
(51) Int. Cl.: G06F 3/06

(54) **SCALABLE STORAGE SYSTEM**
SKALIERBARES SPEICHERSYSTEM
SYSTÈME DE STOCKAGE ÉVOLUTIF

(43) Date of publication of application: 15.07.2020
(73) Proprietor: Vast Data Ltd., Tel Aviv (IL)
(72) Inventor: HALLAK, Renen, Tel Aviv (IL); LEVY, Asaf, Tel Aviv (IL); GOREN, Avi, Tel Aviv (IL); HOREV, Alon, Tel Aviv (IL)
(74) Representative: Lohmanns Lohmanns & Partner mbB
(86) International application number: PCT/US2017/060175
(87) International publication number: WO 2019/089057

(56) References cited:
- EP-B1- 2 883 147
- WO-A1-02/052417
- US-A1- 2014 156 903
- US-A1- 2015 248 366
- US-B2- 8 527 699
- US-B2- 9 754 009

## Description

### TECHNICAL FIELD

The present disclosure generally relates to the field of data storage, and more particularly to large-scale storage systems.

### BACKGROUND

A data center is a large group of networked computer servers typically used by organizations for the remote storage, processing, or distribution of large amounts of data. Traditionally, a data center is arranged using four different networks: a wide area network (WAN) providing connectivity to and from the data center, a local area network (LAN) providing connectivity among the servers of the data center, a storage area network (SAN) providing connectivity between the servers to the storage system, and an internal storage fabric for connecting the various storage elements (e.g., disks). With the advancements in networking technologies, the traditional arrangement of data centers may not provide the optimal performance. For example, using 2 different connectivity types between components of the data centers is an inefficient configuration.

Advanced technologies of solid state persistent drives (SSDs), such as Flash and NVRAM, provide reliable and faster alternatives to traditional magnetic hard drives. The disadvantage of SSDs is their price. Thus, such persistent media is not typically used to backup or archive applications. Further, in servers and storage systems installed in data centers, enterprise grade SSDs are utilized, which ensure a high number of write-erase cycles. Such enterprise grade SSDs are relatively expensive.

To keep up with the demand for storage and performance in data centers, software defined storage (SOS) has been introduced. Software defined storage refers to computer data storage technologies which separate storage hardware from the software that manages the storage infrastructure. The software implements policy management for operation including deduplication, replication, snapshots, and backup. With software defined storage technologies, the requirement of flexible adjustment of infrastructure can be fulfilled.

In a typical arrangement of a software defined storage solution, the storage drives are attached directly to servers executing the storage software (logic). This is inefficient from a physical space perspective, because servers are transitioning to smaller form factors and have less room to hause storage drives. Further, a server attached to multiple storage drives can cause a single point of failure, i.e.,causing inaccessibility to all the drives which are attached to it.

Another major disadvantage of software defined storage solution is the fact that the computing and storage resources are coupled. That is, increasing the computing resources to achieve better performance would require increasing the number of storage drives (e.g., as part of the sever). Similarly, increasing the storage drives to increase the available storage would require increasing the number of severs. US 2015/0248366 A1 teaches an approach for accessing multiple storage devices from multiple hosts without use of remote direct memory access. As taught by US 2015/0248366 A1, a data store switch fabric enabling data communications between a data storage access system and a plurality of compute nodes is provided. Each compute node has integrated compute capabilities, data storage, and a network interface controller. A plurality of physical data storage devices is provided. A a host bus adapter is provided in data communication with the plurality of physical data storage devices and the plurality of compute nodes via the data store switch fabric. The host bus adapter includes at least one submission queue and a corresponding shadow queue. An input/output (I/O) request is received from the plurality of compute nodes, where the I/O request includes an element of the I/O request to the at least one submission queue. Additional information related to the element of the at least one submission queue to the corresponding shadow queue is included.

It would therefore be advantageous to provide a storage system operable as a storage solution that would overcome the deficiencies noted above.

US8527699 B2 discloses a distributed RAID system comprising a plurality of hosts and a plurality of data banks. The hosts are coupled to the data banks by means of switches. Each data bank comprises a write cache that may be stored in some form of non-volatile memory. A write command may be routed from the host issuing the command to an appropriate data bank. A received write command can be placed in a write cache before a response is sent to the host.

### SUMMARY

The invention is defined in independent claims 1, 10 and 13.

### BRIEF DESCRIPTION OF THE DRAWINGS

The subject matter disclosed herein is particularly pointed out and distinctly claimed in the claims at the conclusion of the specification. The foregoing and other objects, features, and advantages of the disclosed embodiments will be apparent from the following detailed description taken in conjunction with the accompanying drawings.
Figure 1 is a network diagram utilized to describe a large-scale storage system according to the various disclosed embodiments.
Figure 2A is an example block diagram of a storage node according to an embodiment.
Figure 2B is an example block diagram of an interface module of a storage node according to an embodiment.
Figure 3 is an example block diagram of a compute node according to an embodiment.
Figure 4 is an example flowchart of a method for performing a read request in a large-scale storage system according to an embodiment.
Figure 5 is an example flowchart of a method for performing a write request in a large-scale storage system according to an embodiment.

### DETAILED DESCRIPTION

It is important to note that the embodiments disclosed herein are only examples of the many advantageous uses of the innovative teachings herein. In general, statements made in the specification of the present application do not necessarily limit any of the various claimed embodiments. Moreover, some statements may apply to some inventive features but not to others. In general, unless otherwise indicated, singular elements may be in plural and vice versa with no loss of generality. In the drawings, like numerals refer to like parts through several views.

According to the disclosed embodiments, a large-scale storage system is disclosed. The system includes at least one compute node communicatively connected to at least one storage node over a communication fabric. The arrangement of the disclosed large-storage system provides a disaggregated software-defined storage architecture, where the computing and storage resources are decoupled.

As will be discussed in greater detail below, each storage node in the system may include a plurality of consumer grade solid state drives (SSDs). Utilizing SSDs allows for fast and random access read and write operations. The compute node is configured to control the write operations so that a lower number of write-erase cycles are performed with each SSD, thereby enlarging the life time of each SSD. As a result, low-grade (and low cost) SSDs can be utilized, thereby reducing the overall cost of the system.

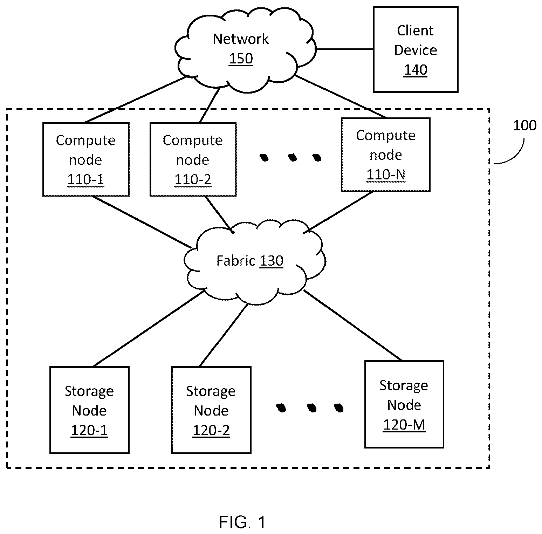

Fig. 1 shows an example diagram of a large-scale storage system 100 according to the disclosed embodiments. The storage system 100 includes a number of N compute nodes 110-1 through 110-N (hereinafter referred to individually as a compute node 110 and collectively as compute nodes 110, merely for simplicity purposes, N is an integer equal to or greater than 1), a number of M storage nodes storage node120-1 through 120-M (hereinafter referred to individually as a storage node 120 and collectively as storage nodes 120, merely for simplicity purposes, M is an integer equal to or greater than 1). The computer nodes 110 and the storage nodes 120 are connected through a communication fabric 130.

In an embodiment, a compute node 110 may be realized as a physical machine or a virtual machine. A physical machine may include a computer, a sever, and the like. A virtual machine may include any virtualized computing instance (executed over a computing hardware), such as a virtual machine, a software container, and the like.

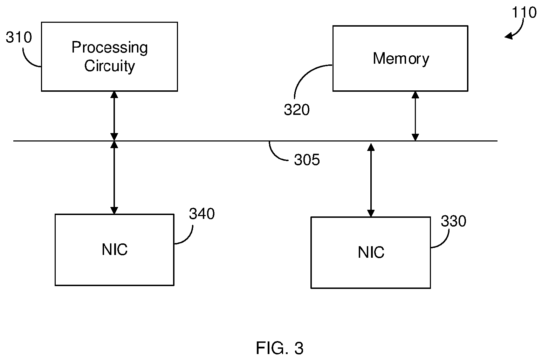

It should be noted that in both configurations (physical or virtual), the compute node 110 does not require any dedicated hardware. An example arrangement of a compute node 110 is provided in Fig. 3.

A compute node 110 is configured to perform tasks related to the management of the storage nodes 120. In an embodiment, each compute node 110 interfaces with a client device 140 (or an application installed therein) via a network 150. To this end, a compute node 110 is configured to receive requests (e.g., read or write requests) and promptly serve these requests in a persistent manner. The network 150 may be, but is not limited to, the Internet, the world-wide-web (WWW), a local area network (LAN), a wide area network (WAN), and the like.

In an embodiment, a compute node 110 is configured to interface with different protocols implemented by the client devices or applications (e.g., HTTP, FTP, etc.) and to manage the read and write operations from the storage nodes 120. The compute node 110 is further configured to translate the protocol commands into a unified structure (or language). Then, each compute node 110 is also configured to logically address and map all elements stored in the storage nodes 120.

Further, each compute node 110 maintains the logical operations of elements and the relationships between the elements (for example, directory trees) and an element attribute (e.g., metadata) via state stored on the storage nodes 120. An element may include a file, a directory, an object, and the like. The mapping and addressing of the elements allow the compute node 110 to maintain the exact physical locations of the elements in the storage nodes 120.

In an embodiment, to efficiently read and write data to the storage nodes 120 from the physical layer, each compute node 110 performs a number of processes including data reduction, data resiliency, and Flash memory management actions (e.g., defrag, wear leveling, and so on).

It should be noted that each compute node 110 operates in the same manner as all other compute nodes 110. In a case of a failure, any compute node 110 can replace the failed node. Further, each compute node can control and mange one or mode storage nodes 120 regardless of the specific architecture of the storage nodes 120. Therefore, there is no coupling between the compute nodes 110 and the storage nodes 120. As such, compute nodes can be added to the system 100 without increasing the number of storage nodes (or their capacity), and vice versa, storage nodes can be added without increasing the number of compute nodes 110.

In order to allow scalability of the system 100, the compute nodes 110 do not communicate with each other to serve application requests. Further, each compute node 110 may be independently upgraded, installed with a different software version, or both.

The storage nodes 120 provide the storage and state in the large-scale system 100. To this end, each storage node 120 includes a plurality of consumer grade SSDs which are relatively inexpensive. Such type of SSDs suffer from a number of drawbacks. Specifically, the SSDs provide poor endurance, data integrity, write latency, power protection, parallel writes, and garbage collection. The critical drawback in using consumer grade SSDs is the endurance, which means that such drives have significantly less write-erase cycles than enterprise grade drives.

According to the disclosed embodiments, discussed in more detail below, the operations for writing and deleting data to the SSDs are controlled to reduce the number of write-erase cycles, thereby ensuring enterprise grade performance with consumer grade SSDs.

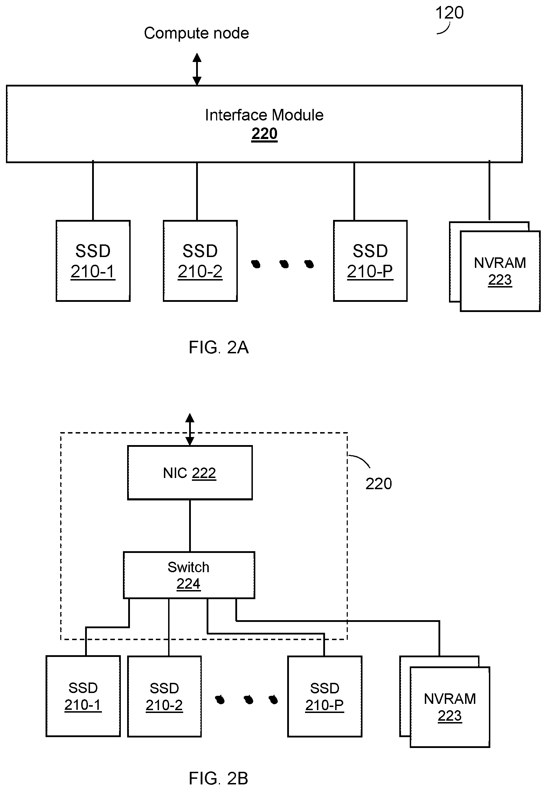

The storage nodes 120 may be configured to have the same capacity as each other or different capacities from each other. In an embodiment, the data stored in each storage node 120 is made redundant internally within the storage node, made redundant at a different storage node, or both. As will be discussed below with reference to Figs. 2A and 2B, each storage node 120 further includes a non-volatile random-access memory (NVRAM) and an interface module for interfacing with the compute nodes 110.

The storage node 120 communicates with the compute nodes 110 over the communication fabric 130. It should be noted that each compute node 110 can communicate with each storage node 120 over the communication fabric 130. There is no direct coupling between a compute node 110 and storage node 120.

In the embodiment, the communication fabric 130 may include an Ethernet fabric, an Infiniband fabric, and the like. Specifically, the communication fabric 130 may enable communication protocols such as, but not limited to, remote direct memory access (RDMA) over Converged Ethernet (RoCE), iWARP, Non-Volatile Memory Express (NVMe), and the like. It should be noted that the communication protocols discussed herein are provided merely for example purposes, and that other communication protocols may be equally utilized in accordance with the embodiments disclosed herein without departing from the scope of the disclosure.

It should be noted that in one example deployment, the client device 140 is part of a computer node 110. In such a deployment, the system 100 does not communicate with an external network, e.g., the network 150. It should be further noted that the communication between the compute nodes 110 and the storage nodes 120 is always facilitated over the fabric 130. It should be further noted that the compute nodes 120 can communicate with each other over the fabric 130. The fabric 130 is a shared fabric.

Fig. 2A shows an example block diagram illustrating a storage node 120 according to an embodiment. The storage node 120 includes a plurality of SSDs 210-1 through 210-P (hereinafter referred to individually as a SSD 210 and collectively as SSDs 210, merely for simplicity purposes), at least one NVRAM, and an interface module 220. In some configurations, two interface modules 220 are provided for redundancy. As noted above, the SSDs 210 may be consumer grade SSDs. The number of SSDs, the configurations of the SSDs, and the capacities of the SSDs may be different from one storage node 210 to another as well as within a storage node 210. The SSDs 210 are placed in an enterprise enclosure (rack) adapted to host SSDs having a consumer grade form factor. For example, the enterprise grade form factor is customarily 2.5" to fit enterprise enclosures expectations, whereas the low-cost consumer grade SSDs' form factor is M.2. To bridge the form factor differences, a number of SSDs may be placed in a single slot of an enterprise enclosure.

According to the disclosed embodiments, the NVRAM 223 is utilized to reduce the number of write accesses to the SSDs 210 and the write amplification. According to an embodiment, data is written first to the NVRAM 223, which returns an acknowledgement after each such data write. Then, during a background process, the data is transferred from the NVRAM 223 to the SSDs 210. The data is kept in the NVRAM 223 until the data is completely written to the SSDs 210. Furthermore, this writing procedure ensures no data is lost when power is off.

As the NVRAM 223 supports low write latency and parallel writes, the entire storage node 120 supports these features. Specifically, the low latency is achieved by acknowledging the write request once the data is saved to the NVRAM 223. The parallel writes are achieved by serving multiple concurrent write requests by the NVRAM 223 and, during the background process, independently fulfilling such requests by saving the data into the SSDs 210.

In an embodiment, the NVRAM 223 is utilized to perform an efficient garbage collection process under the control of a compute node 110. Typically, such a process frees blocks for erasure and subsequent writes. In consumer grade SSDs, the garbage collection is weak and contributes to slow SSD responsiveness. To improve the garbage collection process, write requests from multiple client devices (not shown) are aggregated until a complete data block is ready. Then, complete data blocks are saved in the SSDs 210. As such, the amount of "wasted" storage space is minimized and, thus, the operation of the garbage collection process is simplified. It should be noted that the NVRAM 223 may be, for example, 3D Xpoint, or any non-volatile memory (NVM) device.

Fig. 2B shows an example block diagram of an interface module 220. In an example embodiment, an interface module 220 includes a network interface card (NIC) 222 and a switch 224 connected through an internal bus (not shown), e.g., a PCIe bus.

The NIC 222 allows the communication of the storage node 120 with the compute nodes (110, Fig. 1) over the communication fabric (130, Fig. 1). The NIC 222 may allow communication via at least one of the protocols discussed above.

The switch 224 allows the connection of the multiple SSDs 210 and NVRAM 223 to and NIC 222. In an example embodiment, the switch 224 is a PCIe switch. In another embodiment, more than one PCle switch is utilized to support more connectivity to the SSDs. In some configurations, where non PCle SSDs 210 are available (e.g., Ethernet SSDs), the switch 224 may be a non PCle switch, for example an Ethernet switch.

According to the disclosed embodiments, a storage node 110 is designed to support data resiliency even when using consumer grade SSDs that are typically prone to failures. When a SSD 210 fails, data cannot be read from or written to the SSD. According to embodiment, the resiliency scheme protecting against SSD failures is based on an N+K erasure correction scheme. That is, for every 'N' data SSDs, 'K' redundancy SSDs are utilized, where N and K are integer numbers. It should be appreciated that this resiliency scheme offers increased redundancy and decreased capacity overhead as the system grows.

In another embodiment, a data reduction process is managed by any compute node 110, in order to save on physical storage space. To this end, data from client devices are written to the NVRAM 223 as they are received, i.e., in uncompressed or locally compressed manner. Then, as part of the background process, the data is globally compressed and saved to the SSDs 210. As noted above, once a data block is completely written to the SSDs 210, such data block is deleted from the NVRAM 223.

The compression may include proactively inspecting data to detect duplicates, and eliminating such duplicates. The duplicates detection may be at the block level and at the byte level inside a block. It should be noted that the compression does not increase the latency, as the write request is acknowledged when the data is saved in the NVRAM 223.

Fig. 3 shows an example block diagram illustrating a compute node 110 according to an embodiment. The compute node 110 includes a processing circuitry 310, a memory 320, a first network interface controller (NIC) 330 and a second NIC 340. In an embodiment, the components of the compute node 110 may be communicatively connected via a bus 305.

The processing circuitry 310 may be realized as one or more hardware logic components and circuits. For example, and without limitation, illustrative types of hardware logic components that can be used include FPGAs, ASICs, ASSPs, SOCs, general-purpose microprocessors, microcontrollers, DSPs, and the like, or any other hardware logic components that can perform calculations or other manipulations of information.

The memory 320 may be volatile (e.g., RAM, etc.), non-volatile (e.g., ROM, flash memory, etc.), or a combination thereof. In one configuration, computer readable instructions or software to implement one or more processes performed by compute node 110 may be stored in the memory 320. Software shall be construed broadly to mean any type of instructions, whether referred to as software, firmware, middleware, microcode, hardware description language, or otherwise. Instructions may include code (e.g., in source code format, binary code format, executable code format, or any other suitable format of code).

The first NIC 330 allows the compute node 110 to communicate with the storage nodes via the communication fabric 130 (see Fig. 1) to provide remote direct memory access to data stored in the storage nodes. In an embodiment, the first NIC 130 may enable communication via RDMA protocols such as, but not limited to, Infiniband, RDMA over Converged Ethernet (RoCE), iWARP, and the like.

The second NIC 340 allows the compute node 110 to communicate with client devices (e.g., client device 140, Fig. 1) through a communication network (e.g., the network 150, Fig. 1). Examples for such a network includes, but is not limited to, the Internet, the world-wide-web (WWW), a local area network (LAN), a wide area network (WAN), and the like. It should be appreciated that in some configurations, the compute node 110 may include a single NIC. This configuration is applicable when, for example, the fabric is shared.

Various functions of the large-scale system will be discussed with reference to the elements described in Figs. 1-3.

As any storage system, the disclosed large-scale storage system 100 supports data flows including, but not limited to, write and read. According to the disclosed embodiments, the read and write data flows are performed in a synchronous manner. A data flow starts when a request is received at a compute node 110 and ends when a reply indicating the completion of the request is sent back to a client device 140. All data flows are performed in a persistent manner. That is, no data is lost in case of a failure in one of the compute nodes 110 or in one of the storage nodes 120.

According to the disclosed embodiments, every compute node 110 can access the entire namespace, while each storage node 120 is responsible for a specific (predefined) range of the namespace, i.e., the large-scale storage system 100 implements a sharding mechanism. Further, each compute node 110 implements persistent locks on storage nodes 120 so as to ensure that data flows, and specifically write requests, are synchronously performed such that data integrity is maintained. Data is sharded on a NVRAM 223 according to element handles and according to offset ranges, namespace ranges, or both, that a respective storage node 210 handles. The shard count is constant regardless of the size of the system, thus, in smaller systems, multiple shards will reside on the same NVRAM 223.

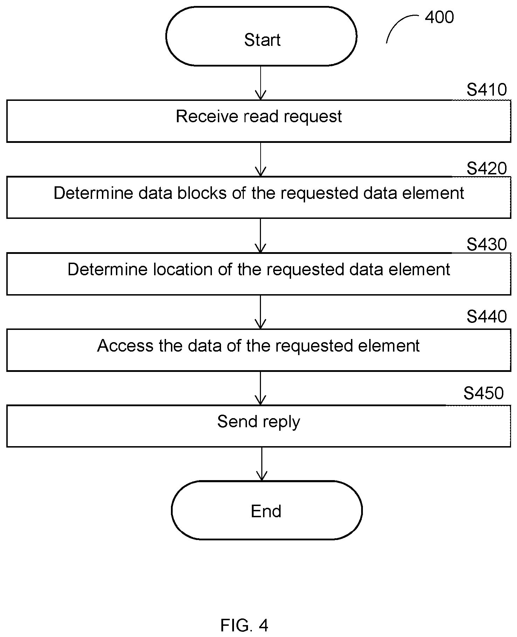

Fig. 4 shows an example flowchart 400 illustrating a method for performing a read request in the large-scale storage system 100 according to an embodiment. In an embodiment, the method illustrated in Fig. 4 is performed by a compute node 110.

At S410, a read request is received from a client device. Such a request typically includes an identifier of a data element to be read. As noted above, an element may include a file, a directory, an object, and the like.

At S420, the data blocks of the requested data element are determined. For example, the data blocks may be a file, a portion of a file, directory or a file in a directory, and so on.

At S430, the location of the requested data element is determined. The location is one of more storage nodes 120. In each storage node 120, the data element can be saved in the NVRAM 223 or one or more of the SSDs 210. In an embodiment, the location is determined using tokens.

A token is an abstraction representing a pointer to a block of data or metadata. A token may be one of three types: direct, mapper, or data reducer. A direct token holds the physical address where a data block is kept (on NVRAM or SSD). A mapper token is used to retrieve the physical address from the NVRAM. The mapper token is given to a mapping table to retrieve the physical address. A data reducer token is used to retrieve the physical address from the interface module. The type of token to be used depends on the data to be read. For example, data blocks either have direct or data reducer tokens. Metadata blocks have direct or mapper tokens.

At S440, using the determined location, the data of the requested element is accessed and retrieved from the storage node(s) storing such data. In some cases, an attempt to access the location may not be successful, for example, due to a failure of the accessed storage node or SSDs. In such cases, the data cannot be read from the determined location. In order to serve the read request, a collection of one or more backup SSDs are determined based on the resiliency scheme and the information is read and decoded from such SSD(s). This solution works fine when the SSD is inaccessible. When the entire storage node is inaccessible, and the collection of redundant SSDs needed reside on that same storage node, an error message is returned.

In another embodiment, a checksum mechanism is employed on the retrieved data to ensure that such data is not corrupted. If the retrieved data is corrupted, the data is read again from the redundant SSD(s) determined by the resiliency scheme.

At S450, a reply including the retrieved data is generated and sent to the client device.

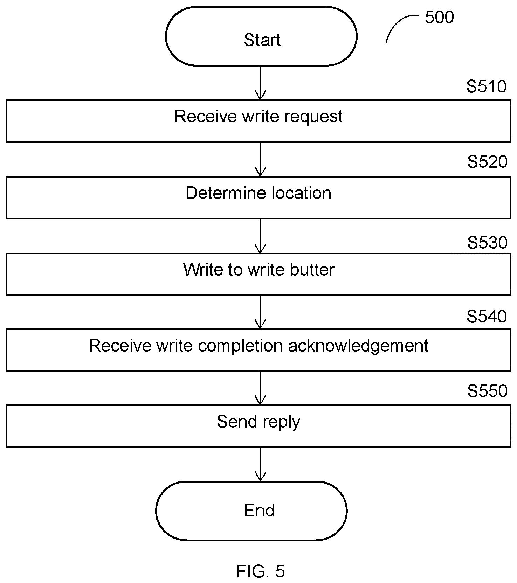

Fig. 5 shows an example flowchart 500 illustrating a method for performing a write request in the large-scale storage system 100 according to an embodiment. In an embodiment, the method illustrated in Fig. 5 is performed by a compute node 110.

At S510, a write request is received from a client device. Such a request typically includes a data element to be written to the storage nodes. As noted above, an element may include a file, a directory, an object, and the like.

At S520, the location for writing the requested element is determined. The location is a location of one or more storage nodes 120, and more specifically of a NVRAM 223 in a storage node. In an embodiment, S520 further includes determining the shard allocated to the received data element and a NVRAM that the determined shard resides on. As an example, the location (of the shard, the NVRAM, or both) can be determined using a hash table mapping an element handler to its physical storage destination. It should be noted that, in some cases, the determined location can be spread over a number of NVRAMs across a number of storage nodes. This would be the case if there is not enough space is one NVRAM.

At S530, the element data is written to a write butter at the determined location. The write buffer ensures that a complete data block is flushed to the SSDs 210. Any new data during a predefined time window is written to the SSDs. In some embodiments, S530 includes allocating space in the write buffer. In yet another embodiment, S530 further includes updating a pointer to the data location in the buffer and other data structures used to indicate the occupancy of the NVRAM.

According to yet another embodiment, S530 includes locking the NVRAM (write buffer) when element data is written and pointers/data structures are updated. The locks are released once the write to NVRAM is completed. The locks may be local or global locks.

At S540, a write completion acknowledgement is received. Such an acknowledgement is received from the storage node upon completion of the write to the NVRAM.

At S550, a reply is sent to the client indicating that the write request has been completed.

The write request processing as discussed with reference to Fig. 5 is a synchronous flow. The data in the write buffer or NVRAM is saved to the SSDs in an asynchronous manner. The data is migrated from the NVRAM to SSDs when the data in the NVRAM reaches a predefined threshold.

Prior to migrating the data from the NVRAM, a data reduction process is performed to reduce the size of the data. Further, a resiliency scheme is applied to save the data in multiple locations.

The various embodiments disclosed herein can be implemented as hardware, firmware, software, or any combination thereof. Moreover, the software is preferably implemented as an application program tangibly embodied on a program storage unit or computer readable medium consisting of parts, or of certain devices and/or a combination of devices. The application program may be uploaded to, and executed by, a machine comprising any suitable architecture. Preferably, the machine is implemented on a computer platform having hardware such as one or more central processing units ("CPUs"), a memory, and input/output interfaces. The computer platform may also include an operating system and microinstruction code. The various processes and functions described herein may be either part of the microinstruction code or part of the application program, or any combination thereof, which may be executed by a CPU, whether or not such a computer or processor is explicitly shown. In addition, various other peripheral units may be connected to the computer platform such as an additional data storage unit and a printing unit. Furthermore, a non-transitory computer readable medium is any computer readable medium except for a transitory propagating signal.

It should be understood that any reference to an element herein using a designation such as "first," "second," and so forth does not generally limit the quantity or order of those elements. Rather, these designations are generally used herein as a convenient method of distinguishing between two or more elements or instances of an element. Thus, a reference to first and second elements does not mean that only two elements may be employed there or that the first element must precede the second element in some manner. Also, unless stated otherwise a set of elements comprises one or more elements. In addition, terminology of the form "at least one of A, B, or C" or "one or more of A, B, or C" or "at least one of the group consisting of A, B, and C" or "at least one of A, B, and C" used in the description or the claims means "A or B or C or any combination of these elements." For example, this terminology may include A, or B, or C, or A and B, or A and C, or A and B and C, or 2A, or 2B, or 2C, and so on.

## Claims

1. A large-scale storage system (100), comprising:
a plurality of compute nodes (110);
a plurality of storage nodes (120), the plurality of storage nodes including a plurality of non-volatile random-access memories (NVRAMs) (223); and
a communication fabric (130) for providing a communication infrastructure between the plurality of compute nodes (110) and the plurality of storage nodes (120);
wherein each compute node of the plurality of compute nodes (110) is configured to independently perform at least a storage operation on any of the storage nodes (120) in a persistent manner, and
wherein each storage node of the plurality of storage nodes (120) provides physical storage space of the large-scale storage system (100) and has the plurality of NVRAMs (223) as write buffers;
wherein each compute node of the plurality of compute nodes (110) is configured to:
receive a write request from a client, wherein the write request includes a data element;
determine a location for writing the data element, wherein the location is determined by determining a shard allocated to the received data element and a NVRAM of the plurality of NVRAMs (223) that the determined shard allocated to the data element resides on; and
shard data on the determined NVRAM according to an element handle of the received data element and according to offset ranges, namespace, or both, that a respective storage node of the plurality of storage nodes (120) is adapted to handle.

2. The system of claim 1, wherein the large-scale storage system (100) is connected to a network (150) to allow access of client devices to the large-scale storage system (100), wherein each of the plurality of compute nodes (110) is configured to receive, from a client device (140), a request over a first protocol and translate a command to the at least a storage operation to be communicated to the storage node (120) over a second protocol of the communication fabric (130).

3. The system of claim 1, wherein each of the plurality of storage nodes (120) comprise:
a plurality of solid state persistent drives (210), wherein each of the plurality of solid state persistent drives (210) is a consumer grade solid state persistent drive;
the plurality of NVRAMs (223), wherein at least one NVRAM for temporary holding data to be written to the plurality of solid state persistent drives (210), thereby reducing a number of write amplification of each solid state persistent drive (210); and
at least one interface module (220) configured to control the plurality of solid state persistent drives (210) and non-volatile random-access memory (223) and communicate with the plurality of compute nodes (110).

4. The system of claim 3, wherein the at least one interface module (220) further comprises:
a network interface card (222) for interfacing with the plurality of compute nodes (110) over the communication fabric (130); and
a switch (224) to allow connectivity to the plurality of solid state persistent drives.

5. The system of claim 4, wherein the compute node of the plurality of compute nodes (110) is further configured to perform on the at least one NVRAM (223) a garbage collection process by aggregating write requests from a plurality of write requests until a complete data block is ready to be written to at least one solid state persistent drive of the plurality of solids state persistent drive.

6. The system of claim 1, wherein each compute node of the plurality of compute nodes (110) accesses an entire namespace of the large-scale storage system (100), and wherein each storage node (120) accesses a predefined range of the namespace.

7. The system of claim 1, wherein the compute node (110) is further configured to:
determine data blocks of a data element to be read;
determine a location of the data blocks, wherein the location is in at least one storage node (120); and
access the determined location to retrieve the data blocks of the requested element.

8. The system of claim 1, wherein the at least a storage operation includes performing a write operation, wherein the compute node (110) is further configured to:
receive a first write request, wherein the first write request includes at least a first data element to be written of the data element;
determine a location to write the received first data element, wherein the location is in at least one storage node (120);
write the first data element to the NVRAM at the determined location; and
receive an acknowledgment upon writing the first data element to the NVRAM.

9. The system of claim 8, wherein the location is determined using a hash table mapping a handler of the first data element to a physical storage destination data block and metadata.

10. A method for performing a write request in a large-scale storage system (100), comprising:
receiving, by a compute node of a plurality of compute nodes (110) of the large-scale storage system (100), a write request, wherein the write request includes at least a first data element to be written, wherein the large-scale storage system (100) includes the plurality of compute node (110) and a plurality of storage nodes (120), wherein the plurality of storage nodes (120) includes a plurality of non-volatile random-access memories (NVRAMs) (223) as write buffers;
determining a location to write the received first data element, wherein the location is in at least one storage node (120) of the large-scale storage system (100);
writing the first data element to a write buffer at the determined location; and
receiving, at the compute node (110), an acknowledgment upon writing the first data element to the write buffer; wherein each compute node of the plurality of compute nodes (110) of the large-scale storage system (100) performs the steps of:
receiving the write request from a client, wherein the write request includes a data element;
determining a location for writing the data element, wherein the location is determined by determining a shard allocated to the received data element and a NVRAM of the plurality of NVRAMs (223) that the determined shard allowed to the data element resides on; and
sharding data on the determined NVRAM according to an element handle of the received data element and according to offset ranges, namespace, or both, that a respective storage node of the plurality of storage nodes (120) is adapted to handle.

11. The method of claim 10, wherein determining the location further comprises:
mapping, using a hash table, a handler of the first data element to a physical storage destination data block and metadata.

12. The method of claim 10, further comprising:
controlling NVRAM (223) to aggregate a complete data block; and
writing the complete data block to at least one solid state persistent drive included in the at least one storage node (120).

13. A non-transitory computer readable medium having stored thereon instructions which, when executed by a processing circuitry, cause the processing circuitry to execute the method according to claim 10.

14. The large-scale storage system (100) of claim 1, wherein the each compute node of the plurality of compute nodes (110) is further configured to:
control aggregation of the write request until a complete data block is ready in the determined NVRAM of the plurality of NVRAMs (223) in order to simplify an operation of a garbage collection process.

## Patentansprüche

1. Großskaliges Speichersystem (100), umfassend:
eine Mehrzahl von Rechenknoten (110);
eine Mehrzahl von Speicherknoten (120), wobei die Mehrzahl von Speicherknoten eine Mehrzahl von nichtflüchtigen Direktzugriffsspeichern (NVRAMs) (223) umfasst; und
eine Kommunikationsstruktur (130) zum Bereitstellen einer Kommunikationsinfrastruktur zwischen der Mehrzahl von Rechenknoten (110) und der Mehrzahl von Speicherknoten (120);
wobei jeder Rechenknoten der Mehrzahl von Rechenknoten (110) dazu konfiguriert ist, unabhängig zumindest eine Speicheroperation auf irgendeinem der Speicherknoten (120) auf persistente Weise auszuführen, und
wobei jeder Speicherknoten der Mehrzahl von Speicherknoten (120) physischen Speicherraum des großskaligen Speichersystems (100) bereitstellt und die Mehrzahl von NVRAMs (223) als Schreibpuffer aufweist;
wobei jeder Rechenknoten der Mehrzahl von Rechenknoten (110) dazu konfiguriert ist:
eine Schreibanforderung von einem Client zu empfangen, wobei die Schreibanforderung ein Datenelement umfasst;
einen Ort zum Schreiben des Datenelements zu bestimmen, wobei der Ort bestimmt wird durch Bestimmen eines dem empfangenen Datenelement zugewiesenen Shards und eines NVRAM der Mehrzahl von NVRAMs (223), auf dem der bestimmte dem Datenelement zugewiesene Shard liegt; und
Daten auf dem bestimmten NVRAM zu sharden gemäß einem Element-Handle des empfangenen Datenelements und gemäß Offset-Bereichen, Namespace, oder beidem, die ein jeweiliger Speicherknoten der Mehrzahl von Speicherknoten (120) zu handhaben ausgelegt ist.

2. System nach Anspruch 1, wobei das großskalige Speichersystem (100) mit einem Netzwerk (150) verbunden ist, um Clientgeräten Zugriff auf das großskalige Speichersystem (100) zu ermöglichen, wobei jeder der Mehrzahl von Rechenknoten (110) dazu konfiguriert ist, von einem Clientgerät (140) eine Anforderung über ein erstes Protokoll zu empfangen und einen Befehl in die zumindest eine Speicheroperation zu übersetzen, die dem Speicherknoten (120) über ein zweites Protokoll der Kommunikationsstruktur (130) mitgeteilt werden soll.

3. System nach Anspruch 1, wobei jeder der Mehrzahl von Speicherknoten (120) umfasst:
eine Mehrzahl von Solid-State-Persistent-Laufwerken (210), wobei jedes der Mehrzahl von Solid-State-Persistent-Laufwerken (210) ein Solid-State-Persistent-Laufwerk der Consumer-Klasse ist;
die Mehrzahl von NVRAMs (223), wobei mindestens ein NVRAM zum temporären Halten von Daten, die in die Mehrzahl von Solid-State-Persistent-Laufwerken (210) geschrieben werden sollen, vorgesehen ist, wodurch eine Anzahl von Schreibverstärkungen jedes Solid-State-Persistent-Laufwerks (210) reduziert wird; und
mindestens ein Schnittstellenmodul (220), das dazu konfiguriert ist, die Mehrzahl von Solid-State-Persistent-Laufwerken (210) und den nichtflüchtigen Direktzugriffsspeicher (223) zu steuern und mit der Mehrzahl von Rechenknoten (110) zu kommunizieren.

4. System nach Anspruch 3, wobei das mindestens eine Schnittstellenmodul (220) ferner umfasst:
eine Netzwerkschnittstellenkarte (222) zur Anbindung mit der Mehrzahl von Rechenknoten (110) über die Kommunikationsstruktur (130); und
einen Switch (224), um Konnektivität zu der Mehrzahl von Solid-State-Persistent-Laufwerken zu ermöglichen.

5. System nach Anspruch 4, wobei der Rechenknoten der Mehrzahl von Rechenknoten (110) ferner dazu konfiguriert ist, auf dem mindestens einen NVRAM (223) einen Garbage-Collection-Prozess auszuführen, indem Schreibanforderungen aus einer Mehrzahl von Schreibanforderungen aggregiert werden, bis ein vollständiger Datenblock bereit ist, um auf mindestens ein Solid-State-Persistent-Laufwerk der Mehrzahl von Solid-State-Persistent-Laufwerken geschrieben zu werden.

6. System nach Anspruch 1, wobei jeder Rechenknoten der Mehrzahl von Rechenknoten (110) auf einen gesamten Namespace des großskaligen Speichersystems (100) zugreift, und wobei jeder Speicherknoten (120) auf einen vordefinierten Bereich des Namespace zugreift.

7. System nach Anspruch 1, wobei der Rechenknoten (110) ferner dazu konfiguriert ist:
Datenblöcke eines zu lesenden Datenelements zu bestimmen;
einen Ort der Datenblöcke zu bestimmen, wobei sich der Ort in mindestens einem Speicherknoten (120) befindet; und
auf den bestimmten Ort zuzugreifen, um die Datenblöcke des angeforderten Elements abzurufen.

8. System nach Anspruch 1, wobei die zumindest eine Speicheroperation das Ausführen einer Schreiboperation umfasst, wobei der Rechenknoten (110) ferner dazu konfiguriert ist:
eine erste Schreibanforderung zu empfangen, wobei die erste Schreibanforderung zumindest ein erstes zu schreibendes Datenelement des Datenelements umfasst;
einen Ort zum Schreiben des empfangenen ersten Datenelements zu bestimmen, wobei sich der Ort in mindestens einem Speicherknoten (120) befindet;
das erste Datenelement in das NVRAM an dem bestimmten Ort zu schreiben; und
eine Bestätigung beim Schreiben des ersten Datenelements in das NVRAM zu empfangen.

9. System nach Anspruch 8, wobei der Ort unter Verwendung einer Hash-Tabelle bestimmt wird, die einen Handler des ersten Datenelements auf einen physischen Speicherziel-Datenblock und Metadaten abbildet.

10. Verfahren zum Ausführen einer Schreibanforderung in einem großskaligen Speichersystem (100), umfassend:
Empfangen, durch einen Rechenknoten einer Mehrzahl von Rechenknoten (110) des großskaligen Speichersystems (100), einer Schreibanforderung, wobei die Schreibanforderung zumindest ein erstes zu schreibendes Datenelement umfasst, wobei das großskalige Speichersystem (100) die Mehrzahl von Rechenknoten (110) und eine Mehrzahl von Speicherknoten (120) umfasst, wobei die Mehrzahl von Speicherknoten (120) eine Mehrzahl von nichtflüchtigen Direktzugriffsspeichern (NVRAMs) (223) als Schreibpuffer umfasst;
Bestimmen eines Orts zum Schreiben des empfangenen ersten Datenelements, wobei sich der Ort in mindestens einem Speicherknoten (120) des großskaligen Speichersystems (100) befindet;
Schreiben des ersten Datenelements in einen Schreibpuffer an dem bestimmten Ort; und
Empfangen, an dem Rechenknoten (110), einer Bestätigung beim Schreiben des ersten Datenelements in den Schreibpuffer;
wobei jeder Rechenknoten der Mehrzahl von Rechenknoten (110) des großskaligen Speichersystems (100) die Schritte ausführt von:
Empfangen der Schreibanforderung von einem Client, wobei die Schreibanforderung ein Datenelement umfasst;
Bestimmen eines Orts zum Schreiben des Datenelements, wobei der Ort bestimmt wird durch Bestimmen eines dem empfangenen Datenelement zugewiesenen Shards und eines NVRAM der Mehrzahl von NVRAMs (223), auf dem der bestimmte dem Datenelement zugewiesene Shard liegt; und Sharden von Daten auf dem bestimmten NVRAM gemäß einem Element-Handle des empfangenen Datenelements und gemäß Offset-Bereichen, Namespace, oder beidem, die ein jeweiliger Speicherknoten der Mehrzahl von Speicherknoten (120) zu handhaben ausgelegt ist.

11. Verfahren nach Anspruch 10, wobei das Bestimmen des Orts ferner umfasst:
Abbilden, unter Verwendung einer Hash-Tabelle, eines Handlers des ersten Datenelements auf einen physischen Speicherziel-Datenblock und Metadaten.

12. Verfahren nach Anspruch 10, ferner umfassend:
Steuern des NVRAM (223), um einen vollständigen Datenblock zu aggregieren; und
Schreiben des vollständigen Datenblocks auf mindestens ein Solid-State-Persistent-Laufwerk, das in dem mindestens einen Speicherknoten (120) enthalten ist.

13. Nicht-transitorisches computerlesbares Medium, auf dem Anweisungen gespeichert sind, die, wenn sie von einer Verarbeitungsschaltung ausgeführt werden, die Verarbeitungsschaltung dazu veranlassen, das Verfahren gemäß Anspruch 10 auszuführen.

14. Großskaliges Speichersystem (100) nach Anspruch 1, wobei jeder Rechenknoten der Mehrzahl von Rechenknoten (110) ferner dazu konfiguriert ist:
die Aggregation der Schreibanforderung zu steuern, bis ein vollständiger Datenblock in dem bestimmten NVRAM der Mehrzahl von NVRAMs (223) bereit ist, um den Betrieb eines Garbage-Collection-Prozesses zu vereinfachen.

## Revendications

1. Un système de stockage à grande échelle (100), comprenant:
une pluralité de nœuds de calcul (110);
une pluralité de nœuds de stockage (120), la pluralité de nœuds de stockage comprenant une pluralité de mémoires à accès aléatoire non volatiles (NVRAM) (223); et
une structure de communication (130) pour fournir une infrastructure de communication entre la pluralité de nœuds de calcul (110) et la pluralité de nœuds de stockage (120);
dans lequel chaque nœud de calcul de la pluralité de nœuds de calcul (110) est configuré pour effectuer indépendamment au moins une opération de stockage sur n'importe lequel des nœuds de stockage (120) de manière persistante, et
dans lequel chaque nœud de stockage de la pluralité de nœuds de stockage (120) fournit un espace de stockage physique du système de stockage à grande échelle (100) et possède la pluralité de NVRAM (223) comme tampons d'écriture;
dans lequel chaque nœud de calcul de la pluralité de nœuds de calcul (110) est configuré pour:
recevoir une requête d'écriture d'un client, dans laquelle la requête d'écriture comprend un élément de données;
déterminer un emplacement pour écrire l'élément de données, dans lequel l'emplacement est déterminé en déterminant un shard attribué à l'élément de données reçu et une NVRAM de la pluralité de NVRAM (223) sur laquelle réside le shard déterminé attribué à l'élément de données; et
fragmenter des données sur la NVRAM déterminée selon un handle d'élément de l'élément de données reçu et selon des plages d'offset, un namespace, ou les deux, qu'un nœud de stockage respectif de la pluralité de nœuds de stockage (120) est adapté à gérer.

2. Le système selon la revendication 1, dans lequel le système de stockage à grande échelle (100) est connecté à un réseau (150) pour permettre l'accès de dispositifs clients au système de stockage à grande échelle (100), dans lequel chacun de la pluralité de nœuds de calcul (110) est configuré pour recevoir, d'un dispositif client (140), une requête via un premier protocole et traduire une commande en la au moins une opération de stockage devant être communiquée au nœud de stockage (120) via un second protocole de la structure de communication (130).

3. **Le** système selon la revendication 1, dans lequel chacun de la pluralité de nœuds de stockage (120) comprend:
une pluralité de lecteurs persistants à état solide (210), dans laquelle chacun de la pluralité de lecteurs persistants à état solide (210) est un lecteur persistant à état solide de classe grand public;
la pluralité de NVRAM (223), dans laquelle au moins une NVRAM sert à conserver temporairement des données devant être écrites dans la pluralité de lecteurs persistants à état solide (210), réduisant ainsi un nombre d'amplifications d'écriture de chaque lecteur persistant à état solide (210); et
au moins un module d'interface (220) configuré pour contrôler la pluralité de lecteurs persistants à état solide (210) et la mémoire à accès aléatoire non volatile (223) et communiquer avec la pluralité de nœuds de calcul (110).

4. **Le** système selon la revendication 3, dans lequel le au moins un module d'interface (220) comprend en outre:
une carte d'interface réseau (222) pour interfacer avec la pluralité de nœuds de calcul (110) via la structure de communication (130); et
un commutateur (224) pour permettre la connectivité avec la pluralité de lecteurs persistants à état solide.

5. **Le** système selon la revendication 4, dans lequel le nœud de calcul de la pluralité de nœuds de calcul (110) est en outre configuré pour effectuer, sur la au moins une NVRAM (223), un processus de collecte des déchets en agrégeant des requêtes d'écriture provenant d'une pluralité de requêtes d'écriture jusqu'à ce qu'un bloc de données complet soit prêt à être écrit sur au moins un lecteur persistant à état solide de la pluralité de lecteurs persistants à état solide.

6. Le système selon la revendication 1, dans lequel chaque nœud de calcul de la pluralité de nœuds de calcul (110) accède à un namespace entier du système de stockage à grande échelle (100), et dans lequel chaque nœud de stockage (120) accède à une plage prédéfinie du namespace.

7. Le système selon la revendication 1, dans lequel le nœud de calcul (110) est en outre configuré pour:
déterminer des blocs de données d'un élément de données à lire;
déterminer un emplacement des blocs de données, dans lequel l'emplacement se trouve dans au moins un nœud de stockage (120); et
accéder à l'emplacement déterminé pour récupérer les blocs de données de l'élément demandé.

8. Le système selon la revendication 1, dans lequel la au moins une opération de stockage comprend l'exécution d'une opération d'écriture, dans lequel le nœud de calcul (110) est en outre configuré pour:
recevoir une première requête d'écriture, dans laquelle la première requête d'écriture comprend au moins un premier élément de données à écrire de l'élément de données;
déterminer un emplacement pour écrire le premier élément de données reçu, dans lequel l'emplacement se trouve dans au moins un nœud de stockage (120);
écrire le premier élément de données dans la NVRAM à l'emplacement déterminé; et
recevoir un accusé de réception lors de l'écriture du premier élément de données dans la NVRAM.

9. Le système selon la revendication 8, dans lequel l'emplacement est déterminé en utilisant une table de hachage mappant un handler du premier élément de données à un bloc de données de destination de stockage physique et à des métadonnées.

10. Un procédé pour effectuer une requête d'écriture dans un système de stockage à grande échelle (100), comprenant:
recevoir, par un nœud de calcul d'une pluralité de nœuds de calcul (110) du système de stockage à grande échelle (100), une requête d'écriture, dans laquelle la requête d'écriture comprend au moins un premier élément de données à écrire, dans lequel le système de stockage à grande échelle (100) comprend la pluralité de nœuds de calcul (110) et une pluralité de nœuds de stockage (120), dans lequel la pluralité de nœuds de stockage (120) comprend une pluralité de mémoires à accès aléatoire non volatiles (NVRAM) (223) comme tampons d'écriture;
déterminer un emplacement pour écrire le premier élément de données reçu, dans lequel l'emplacement se trouve dans au moins un nœud de stockage (120) du système de stockage à grande échelle (100);
écrire le premier élément de données dans un tampon d'écriture à l'emplacement déterminé; et
recevoir, au nœud de calcul (110), un accusé de réception lors de l'écriture du premier élément de données dans le tampon d'écriture;
dans lequel chaque nœud de calcul de la pluralité de nœuds de calcul (110) du système de stockage à grande échelle (100) effectue les étapes suivantes:
recevoir la requête d'écriture d'un client, dans laquelle la requête d'écriture comprend un élément de données;
déterminer un emplacement pour écrire l'élément de données, dans lequel l'emplacement est déterminé en déterminant un shard attribué à l'élément de données reçu et une NVRAM de la pluralité de NVRAM (223) sur laquelle réside le shard déterminé attribué à l'élément de données; et fragmenter des données sur la NVRAM déterminée selon un handle d'élément de l'élément de données reçu et selon des plages d'offset, un namespace, ou les deux, qu'un nœud de stockage respectif de la pluralité de nœuds de stockage (120) est adapté à gérer.

11. Le procédé selon la revendication 10, dans lequel la détermination de l'emplacement comprend en outre:
le mappage, en utilisant une table de hachage, d'un handler du premier élément de données vers un bloc de données de destination de stockage physique et des métadonnées.

12. Le procédé selon la revendication 10, comprenant en outre:
contrôler la NVRAM (223) pour agréger un bloc de données complet; et écrire le bloc de données complet sur au moins un lecteur persistant à état solide inclus dans le au moins un nœud de stockage (120).

13. Un support lisible par ordinateur non transitoire ayant stocké dessus des
instructions qui, lorsqu'elles sont exécutées par un circuit de traitement, amènent le circuit de traitement à exécuter le procédé selon la revendication 10.

14. Le système de stockage à grande échelle (100) selon la revendication 1, dans lequel chaque nœud de calcul de la pluralité de nœuds de calcul (110) est en outre configuré pour:
contrôler l'agrégation de la requête d'écriture jusqu'à ce qu'un bloc de données complet soit prêt dans la NVRAM déterminée de la pluralité de NVRAM (223) afin de simplifier l'opération d'un processus de collecte des déchets.
